# EUROPEAN PATENT APPLICATION

(11) **EP 1 378 848 A1**
(43) Date of publication of application: **07.01.2004**
(21) Application number: 03250371.6
(22) Date of filing: 21.01.2003
(51) Int. Cl.: G06F 17/60

(54) **Method, server and program for information management and application distribution**

(30) Priority: 02.07.2002 JP 2002193808
(71) Applicant: FUJITSU LIMITED, Kawasaki-shi, Kanagawa 211-8588 (JP)
(72) Inventor: Kino, Toru, c/o Fujitsu Limited, Kawasaki-shi, Kanagawa 211-8588 (JP); Inoue, Masakazu, c/o Fujitsu Limited, Kawasaki-shi, Kanagawa 211-8588 (JP); Wajima, Shoji, c/o Fujitsu Limited, Kawasaki-shi, Kanagawa 211-8588 (JP); Yamazaki, Toshiya, c/o Fujitsu Limited, Kawasaki-shi, Kanagawa 211-8588 (JP); Suzuki, Rikiya, c/o Fujitsu Limited, Kawasaki-shi, Kanagawa 211-8588 (JP)
(74) Representative: Stebbing, Timothy Charles

(57) **Abstract**

A user information managing method, an application distributing method, a user information managing server (10), an application distributing server (20), a user information managing program, and an application distributing program to allow the application provider to easily manage the user information even if distribution of applications is outsourced to a third party are provided. The user information managing server (10) for managing user information of a user using the application providing service includes an authenticating part (13) for authenticating the user terminal (30) in response to a request made from the user terminal (30) to use the application (25), and a distribution requesting part (14) for requesting, based on the result obtained from the authentication part (13), to the outsourced third party the distribution of the applications (25) to the user terminal (30) by transmitting a distribution request to the outsourced third party.

## Description

### BACKGROUND OF THE INVENTION

This patent application is based on Japanese priority Patent Application No. 2002-193808 filed on July 2, 2002, the entire contents of which are hereby incorporated by reference.

### 1. Field of the Invention

The present invention generally relates to methods of managing user information, methods of distributing applications, servers for managing user information, servers for distributing applications, programs for managing user information, and programs for distributing applications, and in particular, to a method of managing user information, a method of distributing applications, a server for managing user information, a server for distributing applications, a program for managing user information, and a program for distributing applications which are used in an application providing service.

### 2. Description of the Related Art

An application provider (hereinafter also referred to as the content holder), who develops applications and provides the applications to a user (hereinafter also referred to as the end user), supplies recording media such as CD-ROMs, with applications recorded thereon, to the end user by way of public distribution channel, for example, over the counter sale or mail-order, and collects payments in exchange for the applications provided.

With the spread of a network environment of, for example, the Internet, the content holder is gradually transitioning from recording media marketing of providing applications using the recording media on which the applications are recorded, to network marketing of providing applications through the network environment.

The network marketing of applications is carried out by, for example, downloading the applications installed or registered on the server on the network to the end user, and then collecting payments in exchange for the applications provided. The content holder may outsource the network marketing of applications to a third party, for example, an outsourcing company.

In the conventional recording medium marketing, it is difficult to grasp the state of the applications used by the user, i.e., how often the applications are used by the end users and problems are encountered in that distribution costs of the recording media are incurred and obsolete stocks are accrued.

Furthermore, problems are encountered in that a new development work, as well as infrastructures of, for example, networks and servers, are required to start up the network marketing of applications.

Moreover, when outsourcing the network marketing of applications to a third party such as an outsourcing company, it is difficult to manage the user information or the state of the applications used by the end users at the content holder end as the user information is managed at the server on the third party end.

Therefore, a problem arises in that the content holder can not easily establish a charge setting with a high degree of freedom to the end user or fully control the application providing charge.

### SUMMARY OF THE INVENTION

Accordingly, it is a general object of the present invention to provide, in view of the above problems, a user information managing method, an application distributing method, a user information managing server, an application distributing server, a user information managing program, and an application distributing program for the application provider to easily manage the user information so as to grasp the state of the applications being used by the user and to control the charges therefor even when the application distribution process is outsourced to a third party.

The object of the present invention is achieved by providing a method of managing user information performed by a computer of an application provider that provides applications to a user terminal, wherein the method includes the steps of: authenticating the user terminal in response to a request made from the user terminal to use the application, and requesting to an application distributing server outsourced to distribute the applications to the user terminal by transmitting a distribution request, including at least user identifying information and application identifying information, to the application distributing server.

The object of the present invention is further achieved by a method of distributing an application performed by a computer of a third party outsourced to distribute the applications originally provided from a user information managing server of the application provider, wherein the method includes the steps of: receiving distribution requests including at least user identifying information and application identifying information from the user information managing server, and distributing the application in conformity with the application identifying information to the user terminal in conformity with the user identifying information.

According to the present invention, as it becomes possible for the application provider to manage the user information and make a request to distribute the application by transmitting the distribution request including at least user identifying information and application identifying information, the application provider can easily manage the user information even if the distribution of application is outsourced to a third party. Thus, the application provider can easily establish the charge setting with a high degree of freedom by using the user information.

Furthermore, according to the present invention, as the application can be distributed from a third party, i.e., another company to which the distribution of applications is outsourced, in response to the distribution request from the application provider, there is no need to provide a mechanism for authentication at the third party end.

Furthermore, according to the present invention, by storing the user identifying information and the application identifying information as the user's application usage result history information, a charge setting of a high degree of freedom can be easily established between the application provider and the third party.

### BRIEF DESCRIPTION OF THE DRAWINGS

FIG.1 is a diagram showing an embodiment of a content providing system according to the present invention;
FIG.2 is a diagram showing a hardware configuration according to an embodiment of a user information managing server and a content distributing server according to the present invention;
FIG.3 is a diagram showing an example of user information according to the present invention;
FIG.4 is a diagram explaining an example of a content registering process according to the present invention;
FIG.5 is a diagram explaining an example of a content distributing process according to the present invention;
FIG.6 is a diagram showing an example of history information;
FIG.7 is a diagram explaining an example of a charging process according to the present invention;
FIG.8 is a diagram explaining an example of a charging system according to the present invention; and
FIG.9 is a diagram explaining an example of charging information according to the present invention.

### DESCRIPTION OF THE PREFERRED EMBODIMENTS

The embodiments of the present invention will be explained hereinafter with reference to the drawings. It should be noted that the word "content(s)" used in the present embodiment is synonymous with the word "application(s)". It should also be noted that the word "program" may be used to also refer to a part or a means constituting the server(s).

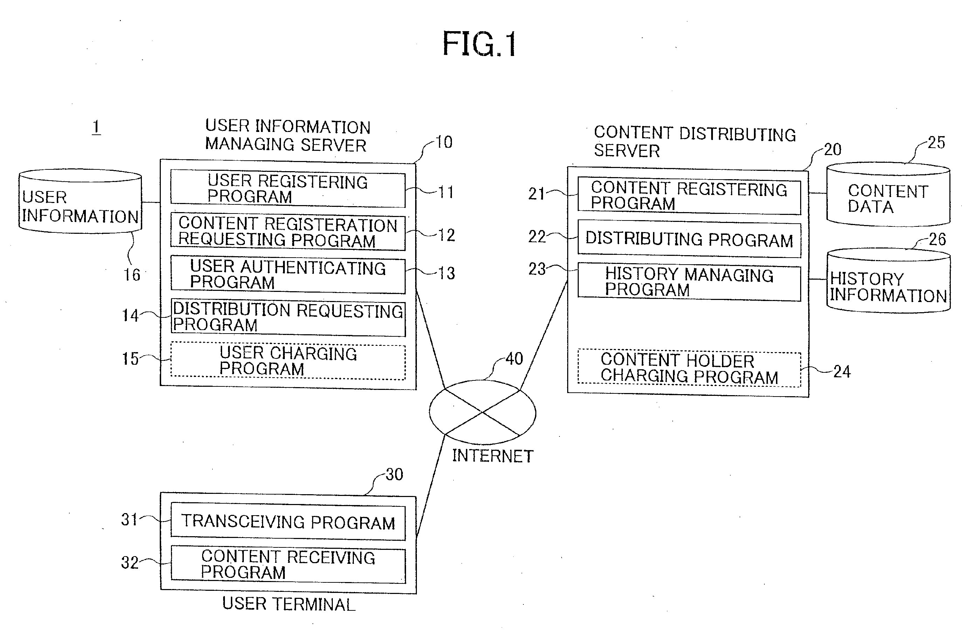

FIG.1 is a diagram showing the construction of one embodiment of a content providing system. In the content providing system 1 of FIG.1, a user information server 10, a content distributing server 20, and a user terminal 30 are provided and are all connected via a network 40, for example, the Internet.

The user information managing server 10 is a computer used by the content holder and is provided with user information 16. The content distributing sever 20 is a computer used by the third party outsourced by the content holder and is provided with content data 25 and history information 26. Furthermore, the user terminal 30 is a computer used by the end user and is provided with contents.

The user information server 10 has a user registering program 11, a content registration requesting program 12, a user authenticating program 13, a distribution requesting program 14 and a user charging program 15, all of which are executed by a processing unit explained later.

The user registering program 11 is executed to register the user information 16 of the end user to which the content data 25 are provided. The content registration requesting program 12 is executed to request the content distributing server 20 to register the content data 25. The user authenticating program 13 is executed to authenticate the end user. The distribution requesting program 14 is executed to request the content distributing server 20 to distribute the content data 25 to the user terminal 30. The user charging program 15 is executed to charge the end user.

The content distributing server 20 has a content registering program 21, a distributing program 22, a history managing program 23, and a content holder charging program 24, all of which are executed by a processing unit explained later.

The content registering program 21 is executed to register, in a storing means, the content data 25 received from the user information managing server 10. The distributing program 22 is executed to distribute the content data 25 to the user terminal 30. The history managing program 23 is executed to manage the distribution history of the content data 25 to the user terminal 30 as the history information 26. The content holder charging program 24 is executed to charge the content holder.

The user terminal 30 has a transmitting and receiving or transceiving program 31 and a content receiving program 32, both of which are executed by a processing unit explained later.

The transceiving program 31 is, for example, a browser, and communicates with the user information managing server 10 and the content distributing server 20 via the network 40. The content receiving program 32 is, for example, a plug in for the browser and is executed to receive the content data 25 from the content distributing server 20.

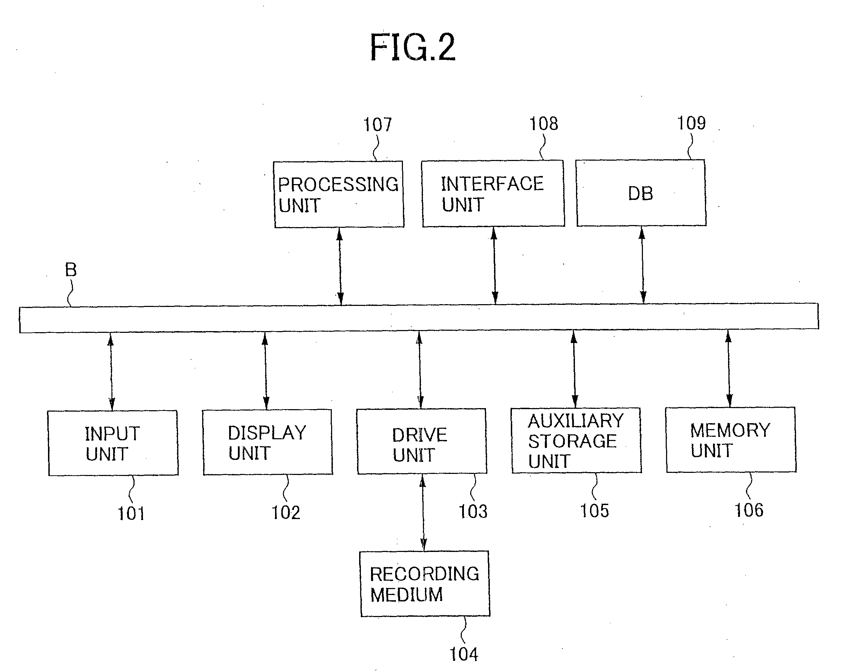

FIG.2 is a schematic diagram showing the configuration of hardware according to one embodiment of the user information managing server and the content distributing server of the present invention.

The user information managing server 10 and the content distributing server 20 are each constructed so as to have an input unit 101, a display unit 102, a drive unit 103, a recording medium 104, an auxiliary storage unit 105, a memory unit 106, a processing unit 107, an interface unit 108 and a database (hereinafter also referred to as the DB) 109, all of which are connected by a bus B.

The input unit 101 is, for example, a keyboard or a mouse, and is used to input various operation demands. The display unit 102 displays various kinds of windows and data necessary for the operation. The interface unit 108 is an interface for connecting to the network 40 and configured by, for example, a LAN adapter and a modem.

The DB 109 manages various kinds of information (for example, the user information 16, the content data 25, the history information 26 and the like) necessary for the processes in the user information managing method or the content distributing method according to the present invention. In addition, a DB server can be separately provided and have such DB server manage the information stored in the DB 109.

Various programs for carrying out the user information managing method or the content distributing method of the present invention are provided by the recording medium 104 such as a CD-ROM. The recording medium 104, with the program recorded thereon, is set into the drive unit 103, and the program is read out of the recording medium 104 and is installed in the auxiliary storage unit 105.

The auxiliary storage unit 105 stores the program installed therein from the recording medium 104 as well as files and data necessary to process the program. The memory unit 106 reads the program out from the auxiliary storage unit 105 at the start-up and stores such program. The processing unit 107 executes the processes in accordance with the program stored in the memory unit 106.

The detailed explanation of the processes carried out in the content providing system 1 according to the present invention will be given hereinafter with reference to the diagrams. It is to be noted that in the content providing system 1, the processes of user registration and the processes of content registration are carried out in advance.

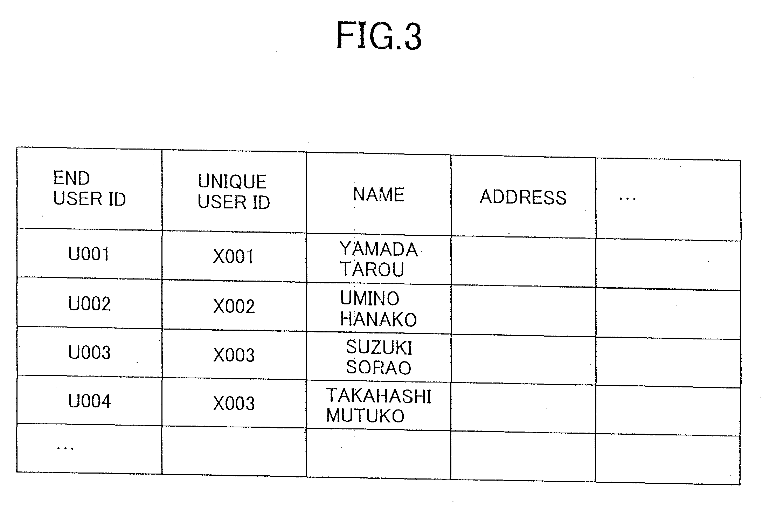

When a request is made from the end user, who wishes to use the content providing system 1, to be registered so as to be able to use the application distributing service, the user registering program 11 that has received the request registers the user information 16 such as that shown in FIG.3.

FIG.3 is a schematic view showing one example of the user information. The user information 16 of FIG.3 includes an end user ID, a unique user ID, a name, and an address. The end user ID is identification information of the end user and matches with the end user on a one-to-one basis. Furthermore, the unique user ID is associated with the end user ID and then registered. It is to be noted that the end user ID and the unique user ID do not necessarily have to have a one-to-one match and can be a one-to-n match.

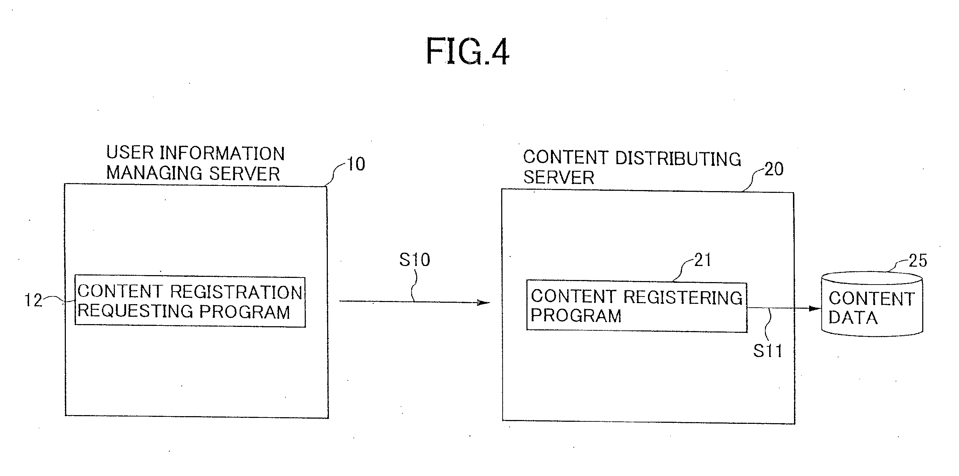

FIG.4 is a diagram explaining one example of the content registering process. When a request is made from, for example, the employees on the content holder end to register the content data 25, the process proceeds to S10 (hereinafter the term "step" will also be referred to as S), where the content registration requesting program 12 of the user information managing server 10 is executed to transmit the content data 25 and the content holder ID for identifying the content holder to the content registering program 21 of the content distributing server 20, and make a request to register the content data 25.

After the content registering program 21 is executed to receive the content data 25 and the content holder ID from the content registration requesting program 12 of the user information managing server 10, the process then proceeds to S11 In S11, the content registering program 21 is executed to produce content ID for identifying the content data 25, associate the content data 25 with the content holder ID and the content ID, and then register the content data 25.

The method of registering the content data 25 is not limited to the above method, and can be, for example, one in which the content distributing server 20 reads the content data out from the recording medium on which the content data are recorded. Furthermore, in executing the content registering program 21, any conversion process that encodes the content into a format suitable to be distributed via, for example, the network, can be carried out when registering the content data. The content ID produced is provided to the user information managing server 10 along with the information that registration has been completed.

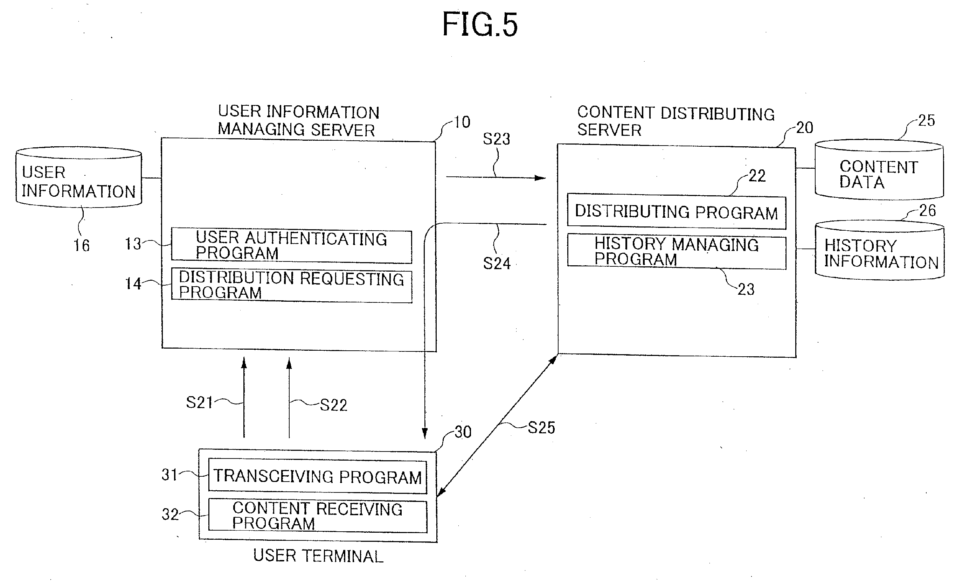

FIG.5 is a diagram explaining one example of the content distributing process. In FIG.5, those parts of the construction not necessary for the explanation are omitted. In S21, the transceiving program 31 of the user terminal 30 used by the end user, wishing for the content data 25 to be distributed, is executed to transmit the end user ID and the password to the user information managing server 10, thus requesting for the user terminal to be logged-in.

When the log-in request from the user terminal 30 is received, the user authenticating program 13 of the user information managing server 10 is executed to carry out the authenticating process in response to such log-in request. After the authenticating process is finished properly, the user authenticating program 13 of the user information managing server 10 notifies the user terminal 30 that authentication has been properly finished. Furthermore, if the authenticating process is not properly finished, the user authenticating program 13 of the user information managing server 10 notifies the user terminal 30, for example, that the authenticating process has not been properly finished.

After the user terminal 30 is notified by the user information managing server 10 that authentication has been properly finished, the process proceeds to S22, at which step the transceiving program 31 of the user terminal 30 is executed to have the user terminal notify the distribution requesting program 14 of the user information managing server 10 regarding the content the end user has selected for distribution.

After being notified of the content selected by the end user, the distribution requesting program of the user information managing server 10 is executed to acquire the unique user ID corresponding to the end user ID received in S21, with reference to the user information 16 of FIG.3. For example, in the case of the user information of FIG.3, when the end user ID "U001" is received, the distributing requesting program 14 of the user information managing server 10 acquires the unique user ID "X001".

The process proceeds from S22 to S23, at which step the distribution requesting program 14 is executed to provide, to the content distributing server 20, the acquired unique user ID, the content holder ID for identifying the content holder using the user information managing server 10, and the content selected by the end user, thus requesting the content data 25 to be distributed to the user terminal 30.

The process proceeds from S23 to S24, at which step the distributing program 22 of the content distributing server 20 is executed to provide the address (for example, URL) of the content distributing server 20 to the user terminal 30 by way of the user information managing server 10. In other words, the distributing program 22 is executed to provide the address of the content distributing server 20 to the user terminal 30 as redirect information.

After the user terminal 30 is provided of the address of the content distributing server 20, the process proceeds to S25, and the content receiving program 32 of the user terminal 30 is executed to request a part of or all of the relevant content registered in the content data 25 using the provided address of the content distributing server 20. The distributing program 22 of the content distributing server 20 is executed to distribute a part of or all of the content data 25 to the user terminal 30 in response to the request made by the user terminal 30. The request and the distribution in S25 can be carried out more than once depending on, for example, the size of the content data 25.

The content receiving program 32 of the user terminal 30 is executed to store a part of or all of the content data 25 received from the content distributing server in S25 in cache, and to activate the stored content data 25.

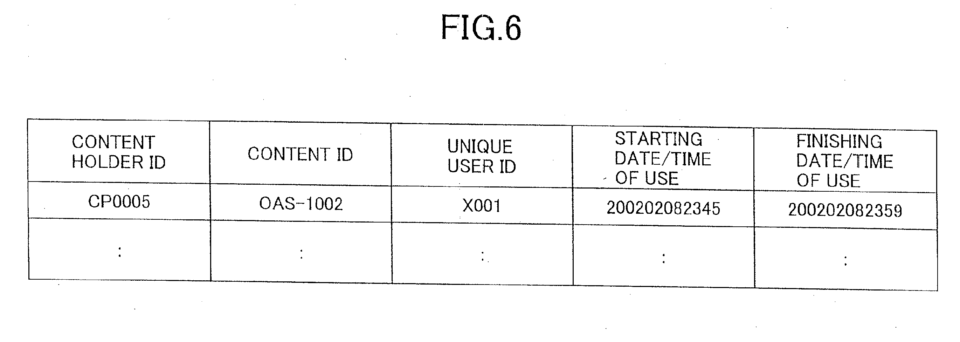

In addition, the history managing program 23 of the content distributing server 20 is executed to manage the distribution history of the history information 26 to the user terminal 30. FIG.6 is a diagram showing one example of the history information. The history information 26 of FIG.6 includes the content holder ID, the content ID, the unique user ID, the starting date and time of use, and the finishing date and time of use.

In the content distributing process shown in FIG.5, because the content holder end manages the user information at the user information managing server 10, there is no need to provide the user information to the content distributing server 20 and thus security of personal information of the end user is improved. Furthermore, because user authentication is carried out at the content holder end, there is no need for the content distributing server 20 to be provided with a mechanism for user authentication.

Although an example of distributing the content data 25 to the user terminal 30 has been explained in S25 in the present embodiment, it is also possible to activate the content data 25 at the content distributing server 20 without distributing the content data 25 to the user terminal 30. In this case, the content distributing server 20 that has activated the content data 25 processes the request made from the user terminal 30 and responds to the user terminal 30 in S25.

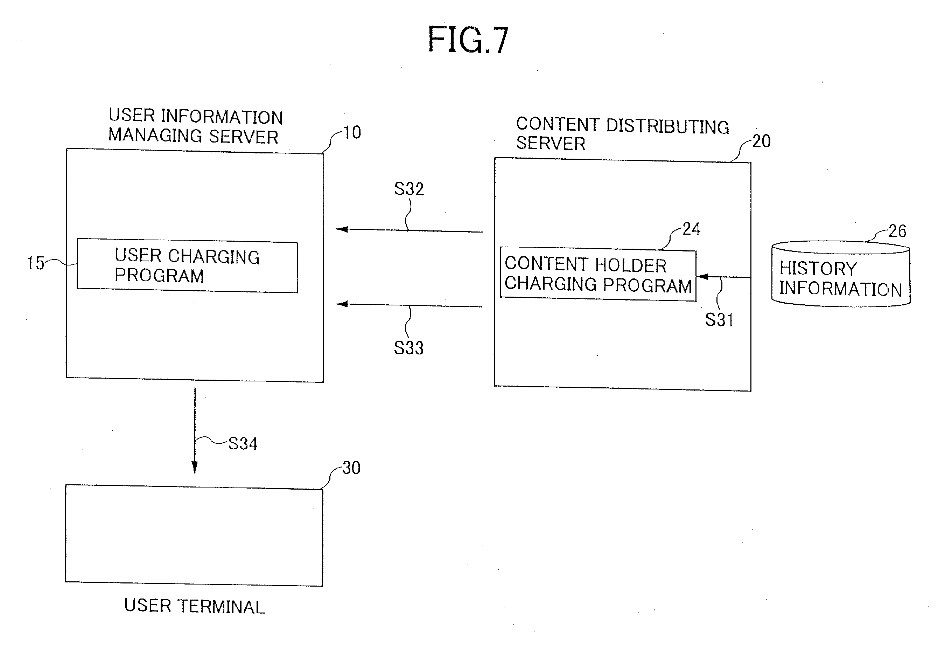

FIG.7 is a diagram showing one example of the charging process. In FIG.7, those parts of the construction not necessary for the explanation are omitted. In S31, the content holder charging program 24 of the content distributing server 20 is executed to select and acquire, from the history information 26 such as shown in FIG.6, the record of distribution history within the period to be charged or the charging period.

The content holder charging program 24 is executed to group the distribution history records selected and acquired from the history information 26 by unique user ID. For example, the content holder charging program 24 is executed to carry out grouping by specifying the unique user ID by "group by (phrase)" of SQL.

The content holder charging program 24 is executed to count the number of groups of the grouped distribution history record, and assumes that number to be the number of unique users. For example, the content charging program 24 count specify by "select (sentence)" of SQL to calculate the number of unique users. In other words, the content holder charging program 24 is executed to assume the number of unique user IDs that have been used more than once within the charging period as the number of unique users.

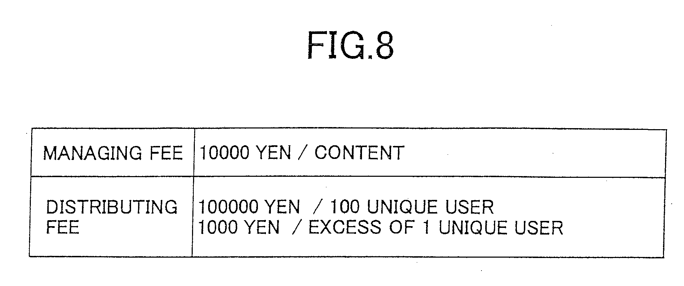

The content holder charging program 24 calculates the charge in accordance with the number of unique users that has been counted as well as the charging system agreed upon by the content holder and the third party. FIG.8 is a diagram explaining one example of the charging system.

In the case of the charging system shown in FIG.8, the charge is calculated in accordance with the managing fee that depends on the number of contents the content holder has registered in the content distributing server 20, and the distributing fee that depends on the number of unique users.

For example, in regards to 10 contents, if the number of unique users that made access thereto within the relevant charging period for charging the content holder that is in contract with 300 unique users is 310, the charge is 410000 yen (managing fee of 100000 yen + distributing fee of 310000 yen). Furthermore, in regards to 10 contents, if the number of unique users of the content holder that is in contract with 300 unique users is equal to or less than 300, the charge will be 400000 yen (managing fee of 100000 yen + distributing fee of 300000 yen) on the assumption that the number of unique users is at least the number of contracts made with the contact holder even if the number of unique users is less than the number of contracts.

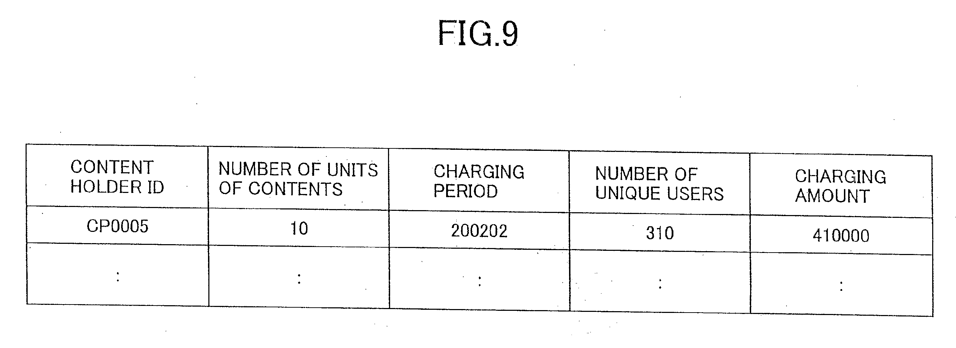

In S32, the content holder charging program 24 is executed to charge the content holder using the charge calculated as above. In addition, the content holder charging program 24 manages charging information as shown in FIG.9, which includes for example, the calculated charge and the number of unique users.

FIG.9 is a diagram showing one example of charging information. The charging information of FIG.9 includes the content holder ID, the number of contents, the charging period, the number of unique users, and the charge. The content holder ID is identification information for identifying the content holder to be charged. The number of contents is the number of contents that the content holder has registered in the content distributing server 20. The charging period is the period within which the charge is calculated, for example, in FIG.9, the charging period "200202" means charging for February of 2002.

In S33, the history managing program 23, for example, of the content distributing server 20 is executed to transmit the history information 26 to the user information managing server 10. In S34, the user charging program 15 is executed to charge the end user using the received history information 26.

In addition, the user charging program 15 is executed to freely calculate the charge from the history information 26 in accordance with the charging system agreed upon by the content holder and the end user. Therefore, the content holder can establish a charge setting with a high degree of freedom to the end user without having any dependency relationship with the charges made for the contents transmitted from the content distributing server 20 to the user terminal 30. Furthermore, by acquiring the history information 26, the content holder can, in detail, be more aware of the demand for the content data 25 by the end user.

In the content providing system 1 according to the present invention, the third party operating the content distributing server 20, the content holder operating the user information managing server, and the end user each have the following advantages.

The third party can make an estimate on the sources by merely considering the load on the content distributing server 20 since the third party does not have any risk in regards to the profit made by providing the contents. In regards to the content holder, the charges made to the content holder by the third party moves only by a small amount and the content holder can freely establish the charge setting for the end user. Finally, the end user can use the content in accordance with the charging system agreed upon by the end user and the content holder.

According to the present invention, the application provider can easily manage the user information even if the distribution of applications is outsourced to a third party, for example, the outsourcing company. Therefore, the application provider can, by using the user information, easily establish the charge setting to the user with a high degree of freedom or can fully control the prices.

According to another feature of the present invention, the third party outsourced to distribute the applications can distribute the applications to the user without managing the user information. Furthermore, according to the present invention, a charging system with a high degree of freedom can be easily established between the application provider and the third party.

The present invention is not limited to specifically disclosed embodiments, and variations and modifications may be made without departing from the scope of the present invention.

## Claims

1. A method of managing user information performed by a computer of an application provider that provides an application (25) to a user terminal (30), wherein said method comprising the steps of:
a) authenticating the user terminal (30) in response to a request to use the application (25) sent from said user terminal (30); and
b) requesting, based on a result of said step a), to an application distributing server (20) of another party, the distribution of the application (25) to a user by transmitting a distribution request comprising at least user identifying information and application identifying information to the application distributing server (20) .

2. The method as claimed in claim 1, wherein said request to use said application (25) comprises first user identifying information that corresponds to at least said user on a one-to-one basis and the application identifying information; and
said distribution request comprises second user identifying information, that corresponds to at least said first user identifying information on a n-to-one basis, and the application identifying information.

3. The method as claimed in claim 1, wherein said distribution request further comprises application provider identifying information.

4. The method as claimed in claim 3, wherein said method further comprises the step of:
c) requesting to said application distributing server (20) the registration of an application (25) by transmitting at least one application to be provided to said user terminal (30), and the application provider identifying information to said application distributing server (20).

5. A method of distributing an application (25) performed by a computer (20) of another party outsourced to distribute the application (25) originally provided from a user information managing server (10) of an application provider; wherein said method comprises the steps of:
a) receiving a distribution request comprising at least user identifying information and application identifying information from said user information managing server (10) ;
b) distributing the application (25) in conformity with said application identifying information to a user terminal (30) in conformity with said user identifying information; and
c) storing said user identifying information and said application identifying information as user's application usage result history information (26).

6. The method as claimed in claim 5, wherein said user information included in said distribution request comprises first user identifying information that corresponds to said user on a one-to-one basis, and second user information that corresponds to said first user identifying information on a n-to-one basis.

7. The method as claimed in claim 5, wherein said distribution request further comprises wherein said distribution request further comprises application provider identifying information.

8. The method as claimed in claim 5, wherein said method further comprises the step of:
d) providing said user's application usage result history information (26) to said user information managing server (10).

9. The method as claimed in claim 6, wherein said method further comprises the step of:
d) acquiring at least one set of said second identifying information included in said user's application usage result history information (26); and
e) preparing charging information for said application provider based on the number of sets of said second user identifying information acquired in said step d).

10. A user information managing server (10) for managing user information using an application providing service; said user information managing server (10) comprises:
an authenticating part (13) authenticating said user terminal (30) in response to a request to use the application (25) from said user terminal (30) used by said user; and
a distribution requesting part (14) requesting, based on a result obtained from said authentication part (13), to an application distributing server (20) of another party, the distribution of application (25) to the user by transmitting a distribution request comprising at least user identifying information and application identifying information to the application distributing server (20).

11. An application distributing server (20) for distributing an application (25) to a user terminal (30) in response to a request from a user information managing server (10) of an application provider; wherein said application distributing server (20) comprises:
a receiving part (22) receiving a distribution request comprising at least user identifying information and application identifying information from said user information managing server (10)
a distributing part (22) distributing the application in conformity with said application identifying information to the user terminal (30) in conformity with said user identifying information; and
a storing part (23) storing said user identifying information and said application identifying information as user's application usage result history information (26).

12. A user information managing program for causing a computer to execute the steps of:
a) authenticating a user terminal (30) in response to a request to use an application (25) from said user terminal (30) used by a user using an application providing service; and
b) requesting, based on a result of said step a), to an application distributing server (20) of another party, the distribution of the application (25) to the user by transmitting a distribution request comprising at least user identifying information and application identifying information to the application distributing server (20) .

13. An application distributing program for causing a computer to execute the steps of:
a) receiving a distribution request comprising at least user identifying information and application identifying information from a user information managing server (10) of an application provider;
b) distributing the application (25) in conformity with said application identifying information to the user terminal (30) in conformity with said user identifying information; and
c) storing said user identifying information and said application identifying information as user's application usage result history information (26).

14. A computer readable medium storing a user information managing program for causing a computer to execute the steps of:
a) authenticating a user terminal (30) in response to a request to use an application (25) from said user terminal (30) used by a user using an application providing service; and
b) requesting, based on a result of said step a), to an application distributing server (20) of another party, the distribution of the application (25) to the user by transmitting a distribution request comprising at least user identifying information and application identifying information to the application distributing server (20) .

15. A computer readable medium storing an application distributing program for causing a computer to execute the steps of:
a) receiving a distribution request comprising at least user identifying information and application identifying information from a user information managing server (10) of an application provider;
b) distributing the application (25) in conformity with said application identifying information to the user terminal (30) in conformity with said user identifying information; and
c) storing said user identifying information and said application identifying information as user's application usage result history information (26).
